(19) Europäisches Patentamt
European Patent Office
Office européen des brevets

(11) Veröffentlichungsnummer: **0 450 177 A1**

# (12) EUROPÄISCHE PATENTANMELDUNG

(21) Anmeldenummer: **90124855.9**

(51) Int. Cl.[5]: **C08G 18/38**, C08G 18/61

(22) Anmeldetag: **20.12.90**

(30) Priorität: **15.03.90 DE 4008259**

(43) Veröffentlichungstag der Anmeldung:
**09.10.91 Patentblatt 91/41**

(84) Benannte Vertragsstaaten:
**AT BE CH DE ES FR GB IT LI NL**

(71) Anmelder: **BAYER AG**

**W-5090 Leverkusen 1 Bayerwerk(DE)**

(72) Erfinder: **Valéri, Thomas, Dr.**
**Goethestrasse 6a**
**W-4047 Dormagen 1(DE)**
Erfinder: **Bräuer, Wolfgang, Dr.**
**Am Eselsdamm 1**
**W-5090 Leverkusen 1(DE)**
Erfinder: **Kanzler, Winfried**
**Friedrichstrasse 26**
**W-5090 Leverkusen 1(DE)**

## (54) Siloxanmodifizierte thermoplastische Polyurethane.

(57) Verbesserte thermoplastische Polyurethanelastomere enthalten ein siloxanmodifiziertes Hartsegment.

EP 0 450 177 A1

Die Erfindung betrifft siloxanmodifizierte thermoplastische Polyurethane und ein Verfahren zu ihrer Herstellung.

Thermoplastische Polyurethan-Elastomere (TPU) sind seit langem bekannt. Sie sind von technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten läßt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben.

TPU können kontinuierlich oder diskontinuierlich hergestellt werden. Als die bekanntesten Herstellverfahren werden das sogenannte Bandverfahren und das Extruderverfahren auch technisch genutzt.

Bei TPU, die aus linearen Polyhydroxyverbindungen, aromatischen Diisocyanaten und Diolen aufgebaut sind, wird die Härte über den Gehalt an sogenannter Hartphase, die im wesentlichen aus Diisocyanat und kurzkettigen Diolen gebildet wird, eingestellt. In der Praxis jedoch ist die Herstellung von TPU's mit geringerer Härte erschwert aufgrund von Verklebungen im Aggregat und schwerer Entformbarkeit. Die erreichbaren verminderten Härten führen in der Regel zu einer Herabsetzung der mechanischen Eigenschaften bei gleichzeitig erhöhtem Druckverformungsrest.

Um die einzigartigen Oberflächeneigenschaften von Polysiloxanen wie z.B. Wasserabweisung, antiadhäsive Eigenschaften, Blutverträglichkeit, verminderten Abrieb und verminderte Härte zu erlangen, wurden in der Vergangenheit bereits verschiedene Wege beschritten.

Ein Weg besteht im Mischen von TPU's mit Polysiloxanen. Aufgrund der schlechten Verträglichkeit von Polysiloxanen mit synthetischen Polymeren müssen die Siloxane modifiziert werden. Eine Möglichkeit besteht im Verwenden von Siloxanen mit vinylpolymerisierbaren Doppelbindungen (JP 59/78236; 1984). Gemäß der US-A- 4 675 361 (= GB-A 21 40 438) verwendet man polydialkylsiloxanhaltige Polyurethane als Additive für blutverträgliche Basispolymere. Angegeben werden lediglich hydroxyalkylterminierte Siloxane als nichtpolare Weichsegmente.

Der Nachteil einer solchen Verbindung liegt in der großen Menge von Polysiloxan, die zur Verbesserung der Oberflächeneigenschaften nötig ist, und zum anderen darin, daß es sich hierbei um ein sehr aufwendiges Herstellverfahren handelt.

Eine weitere beschriebene Lösungsmöglichkeit stellt die Verwendung des weichen Polysiloxans als nichtpolares Weichsegment in einem thermoplastisch verarbeitbaren Elastomer dar (JP 60/252 617, US-A-4 518 758). Wegen des nötigen hohen Molekulargewichts der Siloxankomponenten ist auch hier ein beträchtlicher Siloxananteil erforderlich. Gleichzeitig stört dieser hohe Siloxananteil die Phasenmorphologie derart, daß die mechanischen Eigenschaften abfallen.

Aus der US-A-35 62 352 sind bereits polysiloxanhaltige Blockcopolymere bekannt, bei denen Polysiloxanblöcke und Polyurethanblöcke direkt über Si-N-Bindungen miteinander verbunden sind Es handelt sich hierbei aber nicht um thermoplastische Polyurethane.

Aus der US-A-39 23 747 sind Polyurethane auf Basis eines hydroxylterminierten Polyesters, eines Poly-($\epsilon$-caprolacton)diols, eines hydroxylterminierten Dimethylpolysiloxans und eines Diisocyanates bekannt. Thermoplastische Polyurethane werden nicht erwähnt. Gemäß den Beispielen werden, wie sich aus den quantitativen Angaben ergibt, Polysiloxane mit mehr als zwei Hydroxylgruppen eingesetzt, so daß sich vernetzte Systeme ergeben.

Aus der EP-A-277 816 sind zwar silikonmodifizierte Polyurethane bekannt, jedoch befinden sich hierbei die Siloxaneinheiten in der Seitenkette. Aus der FR-A 21 68 221 sind Polysiloxaneinheiten enthaltene Polyurethane bekannt, die aufgrund fehlender, zur Hartsegmentbildung fähiger Monomerbausteine keine thermoplastischen Polyurethane sind.

Es bestand daher weiterhin die Aufgabe, auf wirtschaftlichem Wege die guten mechanischen Eigenschaften eines TPU's mit den besonderen Eigenschaften eines Polysiloxans zu verbinden, um thermoplastisch verarbeitbare Produkte zu erhalten.

Gegenstand der Erfindung sind thermoplastische Polyurethane auf Basis von

a) wenigstens einem im wesentlichen linearen hydroxylterminierten Polyol, bevorzugt einem Polyester, -ether, -carbonat oder einem Gemisch aus diesen, vorzugsweise mit einem mittleren Molekulargewicht von 800 bis 5000, vorzugsweise 1000 bis 4000,

b) wenigstens einem Isocyanat der allgemeinen Formel OCN-Z-NCO, wobei Z ein zweiwertiges organisches Radikal ist,

c) gegebenenfalls wenigstens einem Diol-Kettenverlängerer, vorzugsweise einem aliphatischen Diol mit 2 bis 14 C-Atomen, bevorzugt Ethylenglykol, Butandiol, Hexandiol, 1,4-Di-(b-hydroxyethyl)-hydrochinon,

d) wenigstens einem difunktionellen Kettenverlängerer der Formel

$$HO-(-\overset{\displaystyle R}{\underset{\displaystyle R_1}{\overset{|}{\underset{|}{Si}}}}-O-)_n-H$$

in welcher jeder der Reste R und $R_1$ unabhängig voneinander organische Reste mit vorzugsweise bis zu 6 aliphatischen Kohlenstoffatomen, bevorzugt 1 bis 3, insbesondere 1 bis 2 C-Atomen oder Phenyl und n = eine Zahl im Bereich von 1 bis 10, vorzugsweise 2 bis 8 bedeutet.

Der Siloxan-Kettenverlängerer d) wird also zur Bildung des Hartsegmentes herangezogen. Unter einen Hartsegment wird ein Segment verstanden, welches durch Wechselwirkungen mit benachbarten Segmenten zu einer Nahordnung (parakristalline Struktur) befähigt ist.

Gegenstand der Erfindung ist weiterhin ein Verfahren zur Herstellung der erfindungsgemäßen thermoplastischen Polyurethanelastomeren wobei man die Aufbaukomponenten a) - d), gegebenenfalls in Gegenwart von Katalysatoren, Hilfsmitteln und/oder Zusatzstoffen zur Reaktion bringt.
und wobei das NCO/OH-Verhältnis der verwendeten Basiskomponenten zwischen 0,85 und 1,2, vorzugsweise zwischen 0,95 und 1,1 liegt.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- und 2,3-Butylenoxid. Vorzugsweise Anwendung finden Ethylenoxid, Propylenoxid und Mischungen aus Propylenoxid-1,2 und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanol-amine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans.

Die im wesentlichen linearen Polyetherole besitzen vorzugsweise Molekulargewichte von 800 bis 5000, vorzugsweise 1000 bis 4000. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischung untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Ethandiol-Polyadipate, 1,4-Butandiol-polyadipate, Ethandiol-butandiol-1,4-polyadipate, 1,6-Hexandiol-neopentylglykol-polyadipate, 1,6-Hexandiol-1,4-butandiol-polyadipate und Polycaprolactone.

Die Polyesterole besitzen Molekulargewichte von 800 bis 5000, vorzugsweise von 1000 bis 4000.

Als organische Diisocyanate b) kommen beispielsweise aliphatische, cycloaliphatische und vorzugsweise aromatische Diisocyanate in Betracht. Im einzelnen seien beispielhaft genannt: aliphatische Diisocyanate, wie Hexamethylen-diisocyanat, cycloaliphatische Diisocyanate, wie Isophoron-diisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und

vorzugsweise aromatische Diisocyanate, wie 2,4-Toluylen-diisocyanat. Gemische aus 2,4- und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylmethan-(1,2) und 1,5-Naphthylen-diisocyanat. Vorzugsweise verwendet werden 1,6-Hexamethylen-diisocyanat, Isophoron-diisocyanat, Diphenylmethan-diisocyanat-Isomerengemische mit einem 4,4'-Diphenylmethan-diisocyanatgehalt von größer als 96 Gew.-% und insbesondere 4,4'-Diphenylmethan-diisocyanat und 1,5-Naphthylen-diisocyanat.

Als Kettenverlängerungsmittel c) mit Molekulargewichten von 60 bis 300 kommen vorzugsweise aliphatische Diole mit 2 bis 14 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di-($\beta$-hydroxyethyl)-hydrochinon, (cyclo)aliphatische Diamine, wie z.B. Isophoron-diamin, Ethylendiamin, 1,2-, 1,3-Propylen-diamin, N-Methyl-propylendiamin-1,3, N,N'-Dimethyl-ethylendiamin und aromatische Diamine, wie z.B. 2,4- und 2,6-Toluylen-diamin, 3,5-Diethyl-2,4- und/oder -2,6-toluylen-diamin und primäre ortho-di-, tri- und/oder tetraalkylsubstituierte 4,4'-Diaminodiphenylmethane.

Bei besonders bevorzugten Kettenverlängerern d) bedeuten R Methyl und $R_1$ Phenyl, Ethyl oder Methyl.

Zur Einstellung von Härte und Schmelzpunkt der TPU können die Aufbaukomponenten b) und c) in relativ breiten molaren Verhältnissen variiert werden. Bewährt haben sich molare Verhältnisse von Polyhydroxylverbindungen b) zu Kettenverlängerungsmitteln c) von 1:1 bis 1:12, insbesondere von 1:1,8 bis 1:4,4, wobei die Härte und der Schmelzpunkt der TPU mit zunehmendem Gehalt an Diolen ansteigt. Hierdurch ergeben sich Produkte mit Härten im Bereich von 70 Shore A bis 75 Shore D, insbesondere von 70 Shore A bis 55 Shore D.

Zur Herstellung der TPU können die Aufbaukomponenten a) bis d), gegebenenfalls in Gegenwart von Katalysatoren, Hilfsmitteln und/oder Zusatzstoffen e) in solchen Mengen zur Reaktion gebracht werden, daß das Äquivalenzverhältnis von NCO-Gruppen der Diisocyanate zur Summe der NCO-reaktiven Gruppen, insbesondere der OH-Gruppen der Komponenten b) und c) 1:0,85 bis 1,20, vorzugsweise 1:0,95 bis 1:1,1 beträgt.

In einer bevorzugten Ausführungsform sind enthalten

26 bis 87 Gew.-% Polyol a)
10 bis 52 Gew.-% Isocyanat b)
2 bis 32 Gew.-% Diol c)
0,002 bis 10 Gew.-% Siloxan d).

Geeignete Katalysatoren, welche insbesondere die Reaktion zwischen den NCO-Gruppen der Diisocyanate a) und den Hydroxylgruppen der Aufbaukomponenten b) und c) beschleunigen, sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0005 bis 0,1 Teilen pro 100 Teilen Polyhydroxylverbindung eingesetzt.

Neben Katalysatoren können den Aufbaukomponenten auch Hilfsmittel und/oder Zusatzstoffe e) einverleibt werden. Genannt seien beispielsweise Gleitmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel.

Nähere Angaben über die obengenannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-A 29 01 774 zu entnehmen.

Durch die Verwendung von kurzkettigen Siloxankettenverlängerern erreicht man über eine hohe Dichte an H-Brücken-Bindungen deren hauptsächliche Verwendung als Hartsegmentbildner im mehrphasigen thermoplastischen Polyurethan.

Durch eine kovalente Verknüpfung erhält man einen festen Einbau und bereits bei niedrigen Siloxankonzentrationen von 1 bis 2 Gew.-% ein TPU mit weitgehend gleichbleibenden guten mechanischen Eigenschaften wie Reißfestigkeit, Dehnung, Weiterreißfestigkeit, Elastizität, Druckverformungsrest und mit den besonderen Eigenschaften von Polysiloxanverbindungen. Diese sind z.B. die stark verminderte Oberflächenspannung, der deutlich verminderte Abrieb und herabgesetzte Härte und die verbesserte Ölbeständigkeit.

Dieses z.B. auch in Mischungen mit anderen Thermoplasten und Elastomeren im Spritzguß, bei der Extrusion, im Beschichtungsverfahrem, und bei der Faserherstellung thermoplastisch verarbeitbare Polyurethan kann im medizinischen Sektor aufgrund seiner Oberflächeneigenschaften (Blutverträglichkeit) eingesetzt werden. Desweiteren sind Anwendungen aufgrund seiner Öl- und Abriebbeständigkeit im technischen Sektor möglich. Die wasserabweisenden Eigenschaften lassen auch einen Gebrauch im Hobby und Sportbereich zu.

Beispiele 1 und 2

In einem 1 l Reaktionsgefäß werden gemäß Tabelle 1 ein Polyester aus Adipinsäure und Butandiol (Mn 2250) und Butandiol-1,4 bei 80 °C vorgelegt. Man gibt unter Rühren 60 °C heißes 4,4-Diisocyanat-diphenylmethan (MDI) hinzu. Die Temperatur steigt hierbei auf 150 bis 170 °C. Nach 60 Sekunden gießt man die Reaktionsmischung auf ein beschichtetes Blech und tempert 30 Minuten lang bei 120 °C nach.

Beispiele 3 bis 5

In einem 1 l Reaktionsgefäß werden gemäß Tabelle 1 ein Polyester aus Adipinsäure und Butandiol (Mn 2250), Butandiol-1,4 und a-, ω-Dihydroxydimethylsiloxan (Mn 540) bei 80 °C vorgelegt. Man gibt unter Rühren 60 °C heißes 4,4-Diisocyanat-diphenylmethan (MDI) hinzu. Die Temperatur steigt hierbei auf 150 bis 170 °C. Nach 60 Sekunden gießt man die Reaktionsmischung auf ein beschichtetes Blech und tempert 30 Minuten lang bei 120 °C nach.

Beispiel 6

Man verfährt wie oben und setzt als Siloxankomponente a,ω-Dihydroxydiethylsiloxan mit Mn = 736 ein.

Beispiel 7

Man verfährt wie oben und setzt als Siloxankomponente a,ω-Dihydroxydimethylsiloxan mit Mn = 338 ein.

Tabelle 1

| Beispiel | Diisocyanat (MDI, g) | Kettenverlängerer Butandiol (g) | Siloxandiol (g) | Ester (g) |
|---|---|---|---|---|
| 1* | 180 | 46,80 | - | 441 |
| 2* | 180 | 44,43 | - | 441 |
| 3 | 180 | 44,43 | 14,04 | 441 |
| 4 | 180 | 43,20 | 21,06 | 441 |
| 5 | 180 | 42,03 | 42,12 | 441 |
| 6 | 180 | 44,43 | 19,14 | 441 |
| 7 | 180 | 44,43 | 8,79 | 441 |

* Beispiel 1 und 2 sind nichterfindungsgemäße Vergleichsbeispiele.

Es werden die in Tabelle 2 angegebenen Ergebnisse erhalten.

Tabelle 2

| Beispiel | 1 | 2 | 3 | 4 | 5 | 6 | 7 | |
|---|---|---|---|---|---|---|---|---|
| Festigkeit (MPa) | 38,6 | 42,4 | 44,9 | 41,8 | 39,5 | 43,3 | 44,2 | DIN 53 504 |
| Dehnung (%) | 680 | 653 | 670 | 665 | 690 | 660 | 657 | " |
| 100 %-Modul (MPa) | 5,0 | 4,8 | 4,7 | 4,3 | 3,9 | 4,6 | 4,8 | " |
| 300 %-Modul (MPa) | 11,4 | 10,7 | 11,1 | 10,2 | 9,9 | 10,5 | 11,2 | " |
| Härte (23°C, Shore A) | 85 | 84 | 81 | 81 | 76 | 81 | 80 | DIN 53 505 |
| Druckverformungsrest (%, 70 h, 23°C) | 26 | 30 | 26 | 26 | 29 | 26 | 27 | DIN 53 517 |
| Abrieb ($mm^3$) | 87 | 82 | 31 | 20 | 18 | 30 | 33 | DIN 53 516 |
| Oberflächenspannung (mN/m)* | 44,5 | 45,1 | 32,3 | 30,0 | 29,5 | 31,8 | 32,8 | * |
| Elastizität (%) | 44 | 46 | 46 | 44 | - | 45 | - | DIN 53 512 |
| Weiterreißwiderstand (n/mm) | 74 | 73 | 76 | 75 | 72 | 76 | 75 | DIN 53 515 |

* Die Oberflächenspannung wird nach dem Meßverfahren zur automatischen Randwinkelbestimmung (DE-A-38 08 860 basierend auf Berechnungen nach Fowkes und Rabel (Farbe und Lack, 77 (1971) 997) wie folgt bestimmt:

Mittels des Video-Systems wird das dynamische Benetzungsverhalten von Flüssigkeit auf Farbstoffunterlagen direkt gemessen und ausgewertet. In einem Zeitbereich von zur Zeit 15 Sekunden werden 49 Randwinkelmessungen durchgeführt. Als Anfangrandwinkel wurde der Randwinkelwert bei 1 Sekunde definiert (Mittelwert aus 3 Werten). Nach ca. 13 Sekunden wird der Mittelwert des Randwinkels der letzten 10 Messungen angegeben (Zeitbereich ca. 11 bis 15 Sekunden). Die Messungen wurden mindestens mit 4 Testflüssigkeiten mit jeweils mindestens 2 Tropfen durchgeführt.

Die Festkörperoberflächenspannungen wurden aus den End-Randwinkeln von 4 Testflüssigkeiten berechnet.

Tabelle 3

Änderung der Zugfestigkeit/Dehnung nach 14 bzw. 21 Tagen Lagerung in ASTM-Öl Nr. 1

| Beispiel | 1 | | 3 | | 4 | |
|---|---|---|---|---|---|---|
| Lagertemperatur °C | 70 | 70 | 70 | 70 | 70 | 70 |
| Lagerzeit/Tage | 14 | 21 | 14 | 21 | 14 | 21 |
| Bruchspannung (%) | -16 | -17 | -12 | -6 | -10 | -10 |
| Bruchdehnung (%) | -7 | -7 | -7 | 0 | 0 | 0 |

Änderung Zugfestigkeit/Dehnung nach 14 bzw. 21 Tagen Lagerung in ASTM-Öl Nr. 3

| Beispiel | 1 | | 3 | | 4 | |
|---|---|---|---|---|---|---|
| Lagertemperatur °C | 70 | 70 | 70 | 70 | 70 | 70 |
| Lagerzeit/Tage | 14 | 21 | 14 | 21 | 14 | 21 |
| Bruchspannung (%) | -10 | -6 | -7 | -7 | -4 | -4 |
| Bruchdehnung (%) | -7 | -7 | -4 | -4 | +1 | -7 |

Die Vorteilhaftigkeit der erfindungsgemäßen Beispiele 3 bis 7 gegenüber den Vergleichsproben 1 und 2 zeigt sich insbesondere in der Verbesserung der Werte für den Abrieb und der Oberflächenspannung sowie

einer Verminderung der Härte bei praktisch gleichbleibenden mechanischen Werten (siehe Angaben zum Modul und zum Druckverformungsrest).

**Patentansprüche**

1. Thermoplastisches Polyurethanelastomer auf Basis von:
   a) wenigstens einem im wesentlichen linearen hydroxylterminierten Polyol
   b) wenigstens einem Isocyanat der allgemeinen Formel OCN-Z-NCO, wobei Z ein zweiwertiges organisches Radikal ist
   c) gegebenenfalls wenigstens einem Diol-Kettenverlängerer, vorzugsweise aliphatischen Diolen mit 2 bis 14 C-Atomen
   d) wenigstens einem difunktionellen Kettenverlängerer der Formel

$$HO-(-\overset{\displaystyle R}{\underset{\displaystyle R_1}{Si}}-O-)_n-H$$

   in welcher jeder der Reste R und $R_1$ unabhängig voneinander organische Reste mit vorzugsweise bis zu 6 aliphatischen Kohlenstoffatomen oder Phenyl und
   n = eine Zahl im Bereich von 1 bis 10, vorzugsweise 2 bis 8, bedeutet.

2. Thermoplastisches Polyurethanelastomer gemäß Anspruch 1, dadurch gekennzeichnet, daß das Polyol ein Polyester, Polyether, Polycarbonat oder ein Gemisch aus diesen mit einem mittleren Molekulargewicht von 800 bis 5000 ist.

3. Thermoplastisches Polyurethanelastomer gemäß Anspruch 3, dadurch gekennzeichnet, daß beim Siloxankettenverlängerer R und $R_1$ die Bedeutung $-CH_3$ oder $-C_2H_5$ haben.

4. Thermoplastisches Polyurethanelastomer gemäß Anspruch 1, dadurch gekennzeichnet, daß der Kettenverlängerer c) Ethylenglykol, Butandiol-1,4, Hexandiol-1,6 oder 1,4-Di-(b-hydroxy-ethyl)-hydrochinon ist.

5. Thermoplastisches Polyurethanelastomer gemäß Anspruch 1, dadurch gekennzeichnet, daß bezogen auf das gesamte Elastomer enthalten sind

| | |
|---|---|
| 26 | bis 87 Gew.-% Polyol a) |
| 10 | bis 52 Gew.-% Isocyanat b) |
| 2 | bis 32 Gew.-% Diol c) |
| 0,002 | bis 10 Gew.-% Siloxan d). |

6. Thermoplastisches Polyurethanelastomer gemäß Anspruch 5, dadurch gekennzeichnet, daß der Anteil des Siloxankettenverlängerers d) am Gesamtkettenverlängerergemisch c + d) 0,1 bis 100 Gew.-% beträgt.

7. Verfahren zur Herstellung eines thermoplastischen Polyurethanelastomeren gemäß Anspruch 1 bis 6, dadurch gekennzeichnet, daß das NCO/OH-Verhältnis der Komponenten a) bis d) 0,85 bis 1,2, vorzugsweise 0,95 bis 1,1 beträgt.

Europäisches Patentamt

# EUROPÄISCHER RECHERCHENBERICHT

Nummer der Anmeldung

**EP 90 12 4855**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | FR-A-2 168 221 (PECHINEY)<br>* Ansprüche 1-6; Seite 2, Zeilen 5-14; Seite 3, Zeile 5 - Seite 4, Zeile 16 * | 1-7 | C 08 G 18/38<br>C 08 G 18/61 |
| X | DE-C-9 579 78 (PHOENIX GUMMIWERKE)<br>* Anspruch; Seite 1, Zeile 14 - Seite 2, Zeile 2 * | 1 | |
| X | CHEMICAL ABSTRACTS, Band 109, Nr. 24, Dezember 1988, Seite 30, Zusammenfassung Nr. 211895c, Columbus, Ohio, US;<br>& JP-A-63 179 916 (DAINIPPON INK) 23-07-1988<br>* Zusammenfassung * | 1 | |
| P,X | EP-A-0 367 720 (CIBA-GEIGY)<br>* Ansprüche 1,6-9 * | 1,6 | |
| A | EP-A-0 078 958 (BAYER)<br>* Ansprüche 1,2,6 * | 1 | |
| A | EP-A-0 068 385 (KANEGAFUCHI)<br>* Ansprüche 1-7; Seite 6, Zeilen 3-7; Seite 9, Zeilen 1-13; Seite 10, Zeile 4 - Seite 11, Zeile 11; Beispiel 1 * | 1 | RECHERCHIERTE SACHGEBIETE (Int. Cl.5)<br>C 08 G |

Der vorliegende Recherchenbericht wurde für alle Patentansprüche erstellt

| Recherchenort | Abschlußdatum der Recherche | Prüfer |
|---|---|---|
| Den Haag | 12 Juli 91 | VAN PUYMBROECK M.A. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument